(19) Europäisches Patentamt
European Patent Office
Office européen des brevets

(11) Veröffentlichungsnummer: **0 330 968**
**A1**

(12) # EUROPÄISCHE PATENTANMELDUNG

(21) Anmeldenummer: **89102966.2**

(22) Anmeldetag: **21.02.89**

(51) Int. Cl.⁴: **C08K 5/55 , C08L 21/00 , C08J 5/10**

(30) Priorität: **04.03.88 DE 3807096**

(43) Veröffentlichungstag der Anmeldung: **06.09.89 Patentblatt 89/36**

(84) Benannte Vertragsstaaten: **AT BE CH DE ES FR GB GR IT LI LU NL SE**

(71) Anmelder: **BAYER AG**
**D-5090 Leverkusen 1 Bayerwerk(DE)**

(72) Erfinder: **Schubart, Rüdiger, Dr.**
**An der Engelsfuhr 27**
**D-5060 Bergisch Gladbach 2(DE)**
Erfinder: **Pieroth, Manfred, Dr.**
**Hahnenweg 4**
**D-5000 Köln 80(DE)**
Erfinder: **Kempermann, Theo, Dr.**
**Friedrich-Schmidt-Strasse 16a**
**D-5000 Köln 41(DE)**

(54) **Verfahren zur Herstellung von Gummi/Metall-Verbundmaterialien mit hoher Gummi/Metall-Haftung.**

(57) Die Haftung zwischen Metall und vulkanisiertem Kautschuk läßt sich durch ein Haftmittel enthaltend mindestens eine organische Cobaltverbindung und mindestens einen Borsäureester erhöhen.

EP 0 330 968 A1

Xerox Copy Centre

# Verfahren zur Herstellung von Gummi/Metall-Verbundmaterialien mit hoher Gummi/Metall-Haftung

Die Erfindung betrifft ein Verfahren zur Herstellung von Metall enthaltenden Verbundmaterialien auf Basis von vulkanisiertem Kautschuk, insbesondere von Metall-verstärktem vulkanisiertem Kautschuk, mit hoher Metall/Vulkanisat-Haftung, wonach man den Kautschuk in Anwesenheit des Metalls und eines Haftmittels enthaltend mindestens eine organische Cobaltverbindung und mindestens einen Borsäureester vulkanisiert.

Viele technische Gummiartikel, beispielsweise Luftreifen, Förderbänder oder Hochdruckschläuche, sind mit verstärkten Stahleinlagen, die häufig in Form von Stahlcorden verwendet werden, ausgestattet.

Um eine gut Leistungsfähigkeit und Lebensdauer dieser Gegenstände zu gewährleisten, ist eine starke, dauerhafte Bindung zwischen Metall und Gummi erforderlich.

Um die Metall/Gummi-Haftung zu verbessern, werden die Filamente des Stahlcords üblicherweise mit Zink oder einer Legierung mit Kupfer und Zink als Hauptbestandteile, vorzugsweise mit Messing, plattiert. Der so behandelte Cord kann direkt, d.h. ohne Verwendung eines Klebers, bei der Vulkanisation in das Vulkanisat eingebunden werden.

Kautschuke mit hohen Schwefelgehalten, wie sie z.B. als Haftmischungen für Gürteleinlagen von Radialreifen üblich sind, erreichen gute ‚Anfangshaftwerte der Metall/Gummi-Haftung ohne besondere Haftmittel. Zur weiteren Verbesserung werden dem verwendeten Kautschuk haftungsfördernde Zusätze zugefügt. (FR-PS 1 323 934, DE-OS 17 20 144, 23 03 674, 24 47 853, 28 41 401, 32 31 913, EP-A 3 820, 9000, US-PS 3 296 242, 4 154 911). Die Metall/Gummi-Haftung nimmt bei Verbundmaterialien auf Basis von vulkanisiertem Kautschuk - sowohl ohne als auch mit Haftmittel - unter der Einwirkung von Feuchtigkeit und Wärme beträchtlich ab.

Aufgabe der Erfindung war also das Bereitstellen von Metall/Gummi-Verbundmaterialien, die die beschriebenen Nachteile nicht oder nicht im bisherigen Maße besitzen.

Gegenstand der Erfindung ist also ein Verfahren zur Herstellung Metall enthaltender Verbundmaterialien auf Basis von vulkanisiertem Kautschuk, wonach man den Kautschuk in Anwesenheit des Metalls und eines Haftmittels vulkanisiert, dadurch gekennzeichnet, daß man als Haftmittel

I. 0.01 bis 0.4, vorzugsweise 0.02 bis 0.2 Gew.-% Cobalt in Form einer organischen Cobaltverbindung und

II. 0.1 bis 6, vorzugsweise 0.3 bis 2.5, Gew.-% Borsäureester,

jeweils bezogen auf Kautschuk, verwendet.

Die organischen Cobaltverbindungen I umfassen z.B. Cobaltkomplexe von β-Dicarbonylverbindungen mit vorzugsweise 5 bis 24 C-Atomen, vor allem von β-Diketonen wie z.B. Derivaten des Acetylacetons, von β-Ketocarbonsäuren wie Acylessigsäuren, und von 2-Acylcycloalkanonen, beispielsweise also

Cobaltkomplexe von Acetylaceton, O-Acetoacetylacetonoxim, O-Acetoacetylbutanonoxim, Benzoylaceton, Dibenzoylmethan, Acetessigsäure-ethylester, -tert.-butylester, -1,3-dichlorpropyl-2-ester, -2-chlorpropyl-1-ester, -cyclohexylester, -isopropenylester, -butan-2-yl-2-ester, -n-dodecylthioester, -phenylester, -m-kresylester, 4-Chloracetessigsäure-ethylester, Methylen-bisacetessigsäureethylester, 2-Ethylacetessigsäureethylester, 2-Carbanilidoacetessigsäureethylester, N-Acetoacetylamid, N-Acetoacetylharnstoff, N-Propionyl-N′-acetoacetylthioharnstoff, 2-Acetylacetessigsäureanilid, 2-Acetylacetessigsäure-p-toludid, -piperidid und -benzylamid, Stearoylessigsäureethylester, 3-[3-Methyl phenyl]- und 3-[4-Methylphenyl]-3-ketopropionsäure-ethylester, 3-Ketoglutarsäurediethylester und -diallylester, Oxalessigsäurediethylester, Malonsäuredimethylester, 2,4,6-Trioxoheptandicarbonsäure-1,7-diethylester, Methantricarbonsäuretriethylester, 2-Acetylcyclopentanon, -cyclohexanon und -cyclododecanon, 2-Propionylcyclopentanon und -cyclohexanon, 2-Benzoylcyclohexanon, Cyclopentanon-2-carbonsäuremethyl- und -ethylester, Cyclohexanon-2-carbonsäuremethyl- und -ethylester, Cyclopentanon-2-carbonsäure-N-propylamid, Cyclohexanon-2-carbonsäure-N-propylamid, O-Acetoacetylcyclohexanonoxim, Cyclohexan-1,4-dion-2,5-dicarbonsäurediethylester, Dehydracetsäure, Triacetsäurelacton, 2-Acetylindanon;

Cobaltkomplexe von Salicylaldehyd und substituierten Salicylaldehyden (DE-OS 3 100 570);

Cobaltkomplexe von Succinylobernsteinsäureestern entsprechend EP-A 3829;

Cobaltsalze von Alkyl- und Arylsulfonsäuren wie z.B. von Methansulfonsäure, Ethansulfonsäure, Benzolsulfonsäure, p-Toluolsulfonsäure;

vorzugsweise aber Cobaltsalze von linearen, verzweigten und cyclischen gesättigten und ungesättigten Carbonsäuren, insbesondere solchen mit 2 bis 24 C-Atomen und 1 bis 4 Carboxylgruppen pro Molekül, wie Essigsäure, 2-Ethylhexancarbonsäure, Isodencancarbonsäure, Laurinsäure, Palmitinsäure, Stearinsäure, Linolsäure, Cyclohexan carbonsäure, Naphthensäuren, Abietinsäure, Salicylsäure.

Die bevorzugteste Cobaltverbindung I ist Cobaltnaphthenat.

Die Borsäureester II umfassen vorzugsweise Borsäureester mit 1 bis 2 Boratomen pro Molekül, nämlich Borsäureester von aliphatischen, cycloaliphatischen, araliphatischen und aromatischen Alkoholen mit vorzugsweise 1 bis 24 C-Atomen und vorzugsweise 1 bis 6, vorzugsweise 1 bis 4, Hydroxylgruppen pro Molekül, z.B. Borsäureester von einwertigen Alkoholen wie n-Hexanol, 2-Ethylhexanol, Trimethylhexanol, n-Octanol, n-Decanol, n-Dodecanol, Palmitinalkohol, Stearylalkohol, Gemische synthetisch hergestellter $C_{12}$-$C_{18}$-Alkohole, z.B. aus Dicyclopentadien hergestellte Monoalkohol- und Dialkoholisomerengemische;
Borsäureester ungesättigter Fettalkohole wie Allylalkohol, Oleinalkohol, Octadecenylalkohol, natürlicher Gemische ungesättigter $C_{12}$-$C_{22}$-Alkohole, Gemische synthetisch hergestellter einfach und mehrfach ungesättigter $C_{14}$-$C_{22}$-Alkohole;
Borsäureester von Acetylenalkoholen wie Propinol und 2-Butinol;
cyclische Borsäureester von $C_2$-$C_{12}$-Diolen wie Ethylenglykol, Propandiol-1,2 und -1,3, Neopentylglykol, 2,2- Diethylpropandiol-1,3, sowie von substituierten cyclischen Diolen wie 1,1-Dimethylolcyclopentan oder Dimethylolcyclohexan;
Borsäureester aus Glycidethern, z.B. Nonylglycidether;
cyclische Borsäureester von $C_3$-$C_{10}$-Triolen, wie von Glycerin, Trimethylolethan und -propan;
Borsäureester von 4- und höherwertigen Alkoholen wie Tetrahydroxybutan, Monosaccharide wie Pentosen und Hexosen, Disaccharide wie Rohrzucker;
Borsäureester von Polyvinylalkohol;
Borsäureester von Aminoalkoholen, z.B. 2-Dimethylaminoethanol, sowie von Aminodiolen und -triolen wie 2-Aminopropandiol-1,3 und Dipropanolamin, Borsäureester von ethergruppenhaltigen acyclischen wie 2-Ethoxy-ethanol oder 2-Nonyloxy-ethanol oder cyclischen Verbindungen wie 5-Ethyl-5-hydroxymethyl-dioxan-1,3 und 2,2-Di-(allyloxymethyl)-butanol-1;
Borsäureester von unsubstituierten, ein- oder mehrfach mit $C_1$-$C_{10}$-Alkyl, -Alkenyl, -Cycloalkyl, -Cycloalkenyl oder Phenyl substituierten Phenolen oder Naphtholen, wie von Kresolen, Vinylphenolen, Isopropenylphenolen, Cyclohexylphenolen oder auch z.B. Brenzcatechin; Borsäureester von Mercaptoalkoholen wie 2-Mercaptoethanol, 2-Thioglycerin;
Borsäureester aus Alkoholgemischen und/oder Phenolgemischen genannter Art;
Borsäureester von Monoestern aus $\alpha,\omega$-Diolen und Mercaptocarbonsäuren wie 2-Mercaptoessigsäure-2-hydroxyethyl-ester und 3-Mercaptopropionsäure-2-hydroxyethylester.

Auch partiell hydrolysierte Borsäureester obiger Art können eingesetzt werden.

Besonders bevorzugte Borsäureester II entsprechen den Formeln

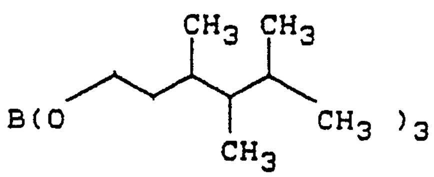

Verbindung 1

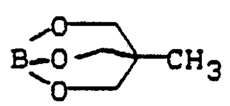

Verbindung 2

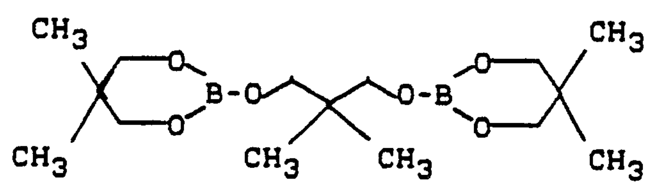

Verbindung 3

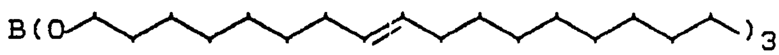

Verbindung 4

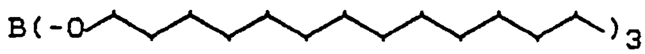

Verbindung 5

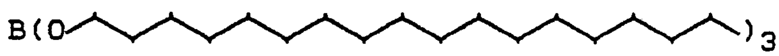

Verbindung 6

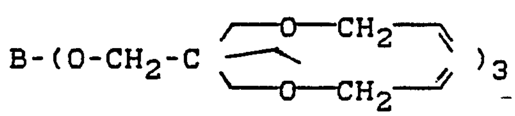

Verbindung 7

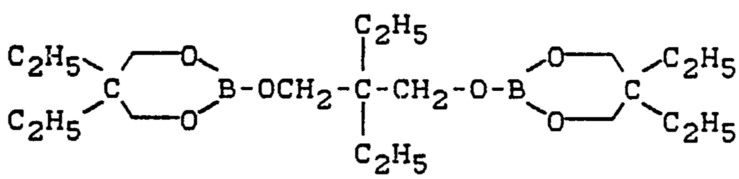

Verbindung 8

Die Borsäureester II sind entweder bekannt oder lassen sich analog den Verfahren zur Herstellung der bekannten Borsäureester herstellen; vgl. Gmelin, Handbuch der Anorganischen Chemie, Bd. 44, Ergänzungswerk zur 8. Aufl., Teil 13, S. 105-108, Springer Verlag, Berlin-Heidelberg-New York 1977.

Vorzugsweise sind die Cobaltverbindungen I frei von eingebauten Boratomen und die Borsäureester II frei von eingebauten Cobaltatomen.

Das Gewichtsverhältnis Cobaltverbindung I/Borsäureester II kann in den Grenzen gemäß den Patentansprüchen schwanken. Eine Dosierung entsprechend 0,1 Gew.-% Cobalt und 1 Gew.-% Borsäureester, berechnet auf Kautschuk, ergibt im allgemeinen hervorragende Ergebnisse. Falls die Haftung über das gewünschte Niveau ansteigt, kann der Gehalt der Cobaltverbindung I entsprechend reduziert werden. So kommt man in vielen Fällen mit einer Dosierung entsprechend 0.05 Gew.-% Cobalt und 1 Gew.-% Borsäureester aus.

Die für das erfindungsgemäße Verfahren bevorzugten Kautschuke umfassen Naturkautschuk, Polychloroprene,Ethylen/Vinylacetat-Copolymerisate, Polybutadiene, Styrol/Butadien-Copolymerisate,Acrylnitril/Butadien-Copolymerisate und deren partiellen Hydrierungsprodukte sowie Mischungen dieser Kautschuke.

Die Für das erfindungsgemäße Verfahren geeigneten Kautschuke besitzen in der Regel Mooney-Viskositäten (DIN 53 523, ML 1+4) von 10 bis 150, vorzugsweise von 25 bis 80 ME.

Die Vulkanisation kann mit allen bekannten Vulkanisiermitteln erfolgen, also mit Hilfe von Peroxiden, vernetzenden Phenolharzen, insbesondere aber mit Schwefel bzw. Schwefelspendern und den üblichen Hilfsmitteln. Die Vulkanisation kann bei Temperaturen von 100 bis 280, vorzugsweise von 110 bis 220 °C erfolgen.

Das erfindungsgemäße Verfahren ist nicht auf Verbundmaterialien mit metallischen Verstärkungsfasern beschränkt, sondern kann auch beispielsweise überall dort angewandt werden, wo größere Metallflächen wie Bleche, Rohre usw. mit Kautschuk überzogen werden sollen.

Beispiele

Für die folgenden Beispiele wurde folgende Kautschukmischung benutzt:

| | | |
|---|---|---|
| Naturkautschuk (SMR 5 Defo 700) | 100 | Gew.-Teile |
| Ruß N 326 | 43 | Gew.-Teile |
| Ruß N 539 | 20 | Gew.-Teile |
| Kolophonium | 3 | Gew.-Teile |
| Stearinsäure | 1 | Gew.-Teil |
| Trimethyldihydrochinolin (®Vulkanox HS) | 1,5 | Gew.-Teile |
| Zinkoxid | 10 | Gew.-Teile |
| Schwefel | 7 | Gew.-Teile |
| Benzothiazyl-2-dicyclohexylsulfenamid (®Vulkacit DZ) | 0,7 | Gew.-Teile |

Die schwefel- und beschleunigerfreie Grundmischung wurde in einem Labor-Innenmischer bei 50° C vorgemischt und anschließend wurden Schwefel, Beschleuniger und Haftmittel auf einem Labormischwerk bei einer Walzentemperatur von 40° C nachgemischt.

Für die Prüfung der Haftung nach der T-Testmethode (vgl. Bayer-Mitteilungen für die Gummi-Industrie, Nr. 29, S. 69) wurden Prüfkörper mit den Abmessungen 20 x 15 x 6 mm hergestellt.

Es wurde Stahlcord mit vermessingter Oberfläche in der Konstruktion 7 x 3 x (0.15 mm) verwendet.

Die Vulkanisation erfolgte bei 150° C entsprechend dem $t_{90}$-Wert. Als wichtige Eigenschaften wurden die Haftung und der Cordbedeckungsgrad bestimmt.

Die Haftwerte wurden bei 80° C Prüftemperatur mit Hilfe eines Zugprüfgerätes bei einer Klemmenabzugsgeschwindigkeit von 100 mm/min ermittelt. Sie werden als die für das Herausreißen des Cordes aus der Gummiprobe in der Längsrichtung erforderliche Kraft in N angegeben. Der Cordbedeckungsgrad wurde visuell nach folgendem Schema bewertet:

IV Strukturbruch im Gummi
III hoher Bedeckungsgrad des Stahlcordes
II niedriger Bedeckungsgrad des Stahlcordes
I Stahlcord ohne Bedeckung

Zu einer Messung wurden jeweils mindestens 4 Prüfkörper mit gleichem Aufbau herangezogen, wobei aus diesen Einzelwerten der Mittelwert zur Auswertung gelangte.

Beispiel 1

Der Kautschuk enthielt Cobaltnaphthenat entsprechend einem Cobaltgehalt von 0,1 Gew.-%, bezogen auf Kautschuk, und 1 Gew.-% Borsäureester, bezogen auf Kautschuk.

Als Vergleich diente ein Haftungsexperiment allein mit Co-Naphthenat mit 0,1 % Co-Metall, bezogen auf Kautschuk.

Tabelle 1

| Ausreißkraft [N] und Cordbedeckungsgrad | | | | |
|---|---|---|---|---|
| Borsäureester Verbindung | | ohne Alterung | Alterung | |
| | | | 2 Tage Dampf 120 °C | 4 Tage Dampf 120 °C |
| - | (Vergleich) | 346 (IV) | 129 (I) | 116 (I) |
| 1 | | 369 (IV) | 290 (II-III) | 207 (II-III) |
| 2 | | 408 (IV) | 365 (IV) | 210 (II-IV) |
| 3 | | 368 (IV) | 271 (IV) | 244 (IV) |
| 4 | | 334 (IV) | 197 (II) | 168 (I) |
| 5 | | 414 (IV) | 223 (II) | 154 (I) |
| 6 | | 317 (IV) | 168 (I-II) | 128 (I-II) |
| 7 | | 436 (IV) | 197 (II-IV) | 140 (II-IV) |

Beispiel 2

Im Beispiel 2 wird gezeigt, daß mit Hilfe der erfindungsgemäßen Verbindungen die übliche Dosierung der dem Stand der Technik entsprechenden Haftmittel auf Cobaltbasis um 50 % abgesenkt werden kann, ohne daß Einbußen der Haftungseigenschaften in Kauf genommen werden müssen.

Tabelle 2

| Ausreißkraft [N] und Cordbedeckungsgrad | | | | | |
|---|---|---|---|---|---|
| Borsäureester Verbindung % | | ohne Alterung Co-Naphthenat % Co | | Alterung | |
| | | | | 2 Tage Dampf 120 °C | 4 Tage Dampf 120 °C |
| a) - | | 0,1 | 346 (IV) | 129 (I) | 116 (I) |
| b) 8 | 1 | 0,05 | 360 (IV) | 209 (II) | 134 (I) |

## Ansprüche

1. Verfahren zur Herstellung Metall enthaltender Verbundmaterialien auf Basis von vulkanisiertem Kautschuk, wonach man den Kautschuk in Anwesenheit des Metalls und eines Haftmittels vulkanisiert, dadurch gekennzeichnet, daß man als Haftmittel
I. 0.01 bis 0.4 Gew.-% Cobalt in Form einer organischen Cobaltverbindung und
II. 0.1 bis 6 Gew.-% Borsäureester,
jeweils bezogen auf Kautschuk, verwendet.

2. Verfahren nach Anspruch 1, wonach das Haftmittel 0.02 bis 0.2 Gew.-% Cobalt in Form einer organischen Cobaltverbindung, bezogen auf Kautschuk, enthält.

3. Verfahren nach Ansprüchen 1 und 2, wonach das Haftmittel 0.3 bis 2.5 Gew.-%, bezogen auf Kautschuk, Borsäureester II enthält.

4. Verfahren nach Ansprüchen 1-3, wobei als Cobaltverbindung I Cobaltnaphthenat eingesetzt wird.

Europäisches Patentamt

# EUROPÄISCHER RECHERCHENBERICHT

Nummer der Anmeldung

EP 89 10 2966

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 065 476 (GOODYEAR)<br>* Seite 9, Zeile 22; Seite 7, Zeile 3 *<br>--- | 1-4 | C 08 K 5/55<br>C 08 L 21/00<br>C 08 J 5/10 |
| Y | DATABASE CHEMICAL ABSTRACTS, Band 93, Nr. 4, 1980, Nr. 27583z, Columbus, Ohio, US; & JP-A-55 29 520 (YOKOHAMA RUBBER CO., LTD) 01-03-1980<br>* Insgesamt *<br>--- | 1-4 | |
| Y | GB-A- 993 045 (DUNLOP)<br>* Anspruch 1; Seite 2, Zeile 84 *<br>--- | 1-4 | |
| A | PATENT ABSTRACTS OF JAPAN, Band 11, Nr. 379 (C-463)[2826], 10. Dezember 1987; & JP-A-62 146 936 (BRIDGESTONE CORP.) 30-06-1987<br>* Insgesamt *<br>--- | 1 | |
| A | GB-A-2 022 087 (MANCHEM LTD)<br>* Ansprüche 8,10; Seite 1, Zeilen 64-73 *<br>----- | 1 | |

RECHERCHIERTE SACHGEBIETE (Int. Cl.4)

C 08 K
C 08 L
C 08 J

Der vorliegende Recherchenbericht wurde für alle Patentansprüche erstellt

| Recherchenort | Abschlußdatum der Recherche | Prüfer |
|---|---|---|
| DEN HAAG | 19-06-1989 | VAN HUMBEECK F.W.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)